Europäisches Patentamt

(19) European Patent Office

Office européen des brevets

(11) Publication number: **0 197 548 B1**

## EUROPEAN PATENT SPECIFICATION

(45) Date of publication of patent specification: **17.07.91**   (51) Int. Cl.⁵: **C03C 27/04, C04B 35/58**

(21) Application number: **86104808.0**

(22) Date of filing: **08.04.86**

(54) Silicon nitride fixtures.

(30) Priority: **10.04.85 US 721731**

(43) Date of publication of application:
**15.10.86 Bulletin 86/42**

(45) Publication of the grant of the patent:
**17.07.91 Bulletin 91/29**

(84) Designated Contracting States:
**DE FR GB**

(56) References cited:
**WO-A-80/00079**
**GB-A- 1 597 471**
**US-A- 3 497 339**

(73) Proprietor: **GTE Products Corporation**
**100 West 10th Street**
**Wilmington, DE 19801(US)**

(72) Inventor: **Fulkerson, William C.**
**209 N. Fourth Street**
**Towanda PA 18848(US)**
Inventor: **Gonzalez, Jeffrey M.**
**R. D. No. 3, Box 56A**
**Towanda PA 18848(US)**

(74) Representative: **Patentanwälte Grünecker,**
**Kinkeldey, Stockmair & Partner**
**Maximilianstrasse 58**
**W-8000 München 22(DE)**

## Description

This invention relates to a fixture made of silicon nitride based material suitable for inserting an article into glass. It also relates to a method for inserting a glass sealing article into glass.

In the manufacture of various glass articles, in particular television face plates, a glass sealing metallic article is embedded in the glass. This is generally done by securing the article in a fixture and thereafter embedding the article in the glass.

Up to this time a variety of materials has been used to make the fixture such as zirconium oxide, silicon oxynitride, reaction bonded silicon nitride and aluminum oxide. Disadvantages of these materials are short life from thermal shock and wear.

In particular from WO 80/00079 there are known polycrystalline ceramic bodies of sintered silicone nitride containing as additional components 6% of yttrium oxide and upto 2.5% aluminium oxide. The density of these known bodies amounts to 100% of the theoretical density.

These conventional silicon nitride polycrystalline ceramic bodies are useful as structural parts or components in high operating temperature environments, for example, vehicular and aerospace engines and structures, regenerated for industrial waste heat recovery, etc. . Said conventional silicion nitride bodies are prepared by sintering a body of particulate material which is free of glass forming impurities or sintering and heat treating a body of particulate material which contains glass forming impurities.

From GB-A-1 597 471 there is known a method of joining metal and/or metal alloy components by electric welding wherein the components are retained in a required relative orientation during welding by locating means which is engaged with the components and is formed, at least in the region thereof presented to the components, of sintered silicon nitride or a sintered ceramic product containing at least 80% of volume of a single phase silicon aluminium oxinitride.

Therefore, fixtures made of material which allow an increase in the life span of such fixtures would be desirable and an advancement in the art.

In accordance with a first aspect of this invention, there is provided a fixture suitable for inserting metallic articles into glass as defined in Claim 1.

In accordance with a second aspect of this invention, there is provided a method for inserting a glass sealing metallic article into glass as defined in Claim 2.

In the following the invention will be described in more detail with reference to preferred embodiments thereof.

The starting material used in making the fixture of this invention is a silicon nitride based material having a composition as follows in percent by weight: from about 0.5% to about 4% and preferably about 2% aluminum oxide, from about 4% to about 8% and preferably about 6% yttrium oxide, and the balance silicon nitride. The silicon nitride which is used is preferably of the following composition, in percent by weight: less than about 0.0100% aluminum oxide, less than about 0.0010% calcium, less than about 0.0020% magnesium, less than about 0.0100% molybdenum, the total cations being about 0.0500%, from about 0.5% to about 3.0% oxygen, less than about 0.050% chlorine, less than about 0.050% iron, less than about 0.5% silicon oxynitride, less than about 0.5% silicon dioxide, and less than about 0.2% silicon. This composition is supplied by the Chemical and Metallurgical Division of GTE Products Corporation under the trade name of SN 502.

The individual components of the starting material are first blended together by any conventional method which will result in a relatively uniform admixture suitable for the subsequent pressing, forming, and heating operations. A preferred method is described below.

The individual components are first milled. The milling is done preferably in a vibration energy mill. One such preferred mill is the "Vibro Energy" grinding mill manufactured by SWECO, Inc., a subsidiary of Emerson Electric Company. The resulting milled mixture is then passed through a 420 $\mu$m (40 mesh) screen. An aqueous slip is then prepared of the resulting screened material. The slip is then passed through a 149 $\mu$m (100 mesh) screen and spray dried to form the relatively uniform admixture. This admixture is then isopressed at preferably from about 137.9 to about 344.7 N/mm$^2$ (20,000 to about 50,000 psi) at room temperature into a billet. The billet is then fired at a sufficient temperature, preferably at from about 1000° C to about 1400° C for a sufficient time, preferable for from about 0.5 hours to about 2.0 hours to densify and harden it sufficiently so that is can be preformed to near final dimensions of the fixture of this invention. The preforming is done by any standard machining technique. The resulting preformed fixture is then sintered at a sufficient pressure and temperature for a sufficient time to form the final fixture having a density of from about 85% to about 97%, and preferably about 90% to about 97% of the theoretical density of the silicon nitride based material. The sintering is done preferably at from about 1.38 to about 2.07 N/mm$^2$ (200 to about 300 psi) and most preferably at about 1.38 N/mm$^2$ (200 psi) at from about 1800° C to about 1900° C under nitrogen for from about 2 hours to about 6 hours. The resulting fixture can be further machined to the desired final dimensions by standard techniques such as diamond machining.

The fixture is suitable for inserting or embedding metallic articles into glass. One particular application is the insertion of metallic studs into glass face panels such as television face panels.

The fixture is generally cylindrical in shape having one end capable of receiving a holding means such as a mechanical means or vacuum and the other end defining an opening capable of receiving a metallic glass sealing article. The fixture has the composition given previously for the starting material. The above density and composition ranges impart optimum wear resistance, oxidation resistance, thermal shock resistance and strength to the fixture. At densities less than about 85% of the theoretical, there is the problem of porosity resulting in fixtures of inferior quality with respect to the above named characteristics. At densities greater than about 97% of the theoretical, there is a high liklihood of the fixtures cracking under the stress of the induction heating operations in which they are used.

The metallic articles that are held in the fixture are glass sealing articles, that is, they are capable of sealing to glass. The sealing is accomplished by means of an oxide coating thereon. In general, the articles can be of any shape and the fixture can be made to accommodate the dimensions of the article. Preferred materials for the articles are those having thermal expansion characteristics suitable to consummate a glass-to-metal seal. Especially preferred are alloys listed by AISI (American Iron and Steel Institute) designations such as Number 4 Alloy, which is a nickel-chrome-iron material available from GTE Products Corporation, Warren, Pa; and 430 Ti stainless steel which is a chrome-iron alloy produced by Allegheny Corp., Pittsburgh, Pa.

Below is a description of a preferred article which can be held in the fixture of this invention. It is to be understood that this description is an example which is non-limiting:

The article can be a face panel stud which is inserted into face panels such as those of television sets. This type of article consists essentially of a head portion, a transition or shoulder portion, and a skirt portion. United States Patent 3,379,913, April 23, 1968 by Gannoe describes an improvement in such articles or studs. The improvement is evidenced internally by a substantial uniformity of material thickness in the head portion and shoulder portion which extends in a circumferentially expanding manner from the periphery of the base of the head portion. The skirt portion integrally extending in a substantially perpendicular circumferential manner from the periphery of the shoulder portion exhibits a decrease in material thickness from that of the shoulder portion to an extremital edge portion therearound.

An improved article or stud over the aforementioned article is described in United States Patent 3,526,550. This particular stud has an improved oxide coating on the stainless steel stud. This coating is an oxide having a rhombohedral solid solution of oxides of iron and chromium. The coating which partially dissolves in the glass in which the stud is embedded, leaves a film firmly adherent to the metal surface of the stud, thereby enabling the creation of a vacuum tight metal- to-glass seal.

One particular use of the above described fixture is in inserting or embedding a glass sealing metallic article, for example, the stud described previously into glass, for example, glass face panels.

The method for accomplishing this is as follows.

The fixture is formed as described previously of the composition and density described previously. The article at its head end is then contacted with the fixture at the article receiving end and releasably secured by the holding means at the holding means end of the fixture. The holding means can be any such means to secure the article such as mechanical means or vacuum. The article is then induction heated to a sufficient temperature to enable the embedding of the article into glass. Preferred heating temperatures are from about 1000° C to about 1400° C. The article at its skirt end is then embedded into the glass. The temperature of the glass at the time of embedding is preferably above the strain point of the glass. The article is then removed from the fixture by releasing the holding means. The fixture can now be used to embed another article into glass.

Because of the unique properties of the composition and density range of the fixture, it has improved life over fixtures made of zirconium oxide, silicon oxynitride, reaction bonded silicon nitride and aluminum oxide. The life of the fixtures of this invention shows increased life of from about 1.25 to about 16 times the life of prior art material.

## Claims

1. A fixture suitable for inserting metallic articles into glass, said fixture being made of a silicon nitride based material consisting essentially of, in % by wt, from about 0.5% to about 4% aluminium oxide, from about 4% to about 8% yttrium oxide and, the balanced silicon nitride and being generally cylindrical in shape having one end capable of receiving a holding means and the other end defining an opening capable of receiving a metallic glass sealing article, the density of said fixture being from 85% to 97% of the theoretical density of said silicon nitride based material.

2. A method for inserting a glass sealing metallic article into glass, said method comprising:

a) forming a fixture for gripping said article, said fixture being made of a silicon nitride based material and having a composition consisting essentially of in percent by weight, from about 0.5% to about 4% aluminum oxide, from about 4% to about 8% yttrium oxide, and the balance silicon nitride, and a density of from about 85% to about 97% of the theoretical density of said silicon nitride based material;

b) contacting said article with said fixture to releasably secure said article to said fixture;

c) induction heating said article at a temperature sufficient to enable the embedding of said article into glass;

d) embedding said article into glass; and

e) removing said fixture from said article.

3. A method of claim 2 wherein said article is embedded in glass which is at a temperature above the strain point of said glass.

**Revendications**

1. Pièce de fixation appropriée pour insérer des éléments métalliques dans du verre, la dite pièce de fixation étant réalisée dans un matériau à base de nitrure de silicium et comprenant essentiellement, en % en poids, entre 0,5 et 4% environ d'alumine, entre 4 et 8% environ d'oxyde d'yttrium, et le reste de nitrure de silicium, et affectant une forme générale cylindrique dont une extrémité peut recevoir un moyen de saisie et l'autre extrémité détermine une ouverture pouvant recevoir un élément métallique à sceller dans le verre, la densité de la dite pièce de fixation étant comprise entre 85 et 97% de la densité théorique du dit matériau à base de nitrure de silicium.

2. Procédé d'insertion dans du verre d'un élément métallique à sceller dans le verre, le dit procédé comprenant les étapes suivantes:

a) mise en forme d'une pièce de fixation pour saisir le dit élément, la dite pièce de fixation étant réalisée dans un matériau à base de nitrure de silicium et comprenant essentiellement, en % en poids, entre 0,5 et 4% environ d'alumine, entre 4 et 8% environ d'oxyde d'yttrium, et le reste de nitrure de silicium, et présentant une densité comprise entre 85 et 97% environ de la densité théorique du dit matériau à base de nitrure de silicium;

b) mise en contact du dit élément et de la dite pièce de fixation pour fixer de façon amovible le dit élément à la dite pièce de fixation;

c) chauffage par induction du dit élément jusqu'à une température suffisante pour permettre l'insertion du dit élément dans le verre;

d) insertion du dit élément dans le verre; et

e) enlèvement de la dite pièce de fixation du dit élément.

3. Procédé selon la revendication 2 caractérisé en ce que le dit élément est encastré dans du verre qui est à une température supérieure au point de déformation du dit verre.

**Patentansprüche**

1. Befestigungsteil zum Einsetzen von Metallgegenständen in Glas, wobei das Befestigungsteil aus eine auf Siliciumnitrid basierenden Material hergestellt ist, welches wesentlichen besteht aus etwa 0,5 bis 4 Gew.-% Aluminiumoxid, etwa 4 bis 8 Gew.-% Yttriumoxid, Rest Siliciumnitrid und eine im wesentlichen zylindrische Gestalt aufweist, wobei ein Ende imstande ist, eine Halteeinrichtung aufzunehmen und das andere Ende eine Öffnung definiert, welche imstande ist, einen metallischen Glasdichtungsgegenstand aufzunehmen, wobei die Dichte dieses Befestigungsteils 85 bis 97 % der theoretischen Dichte des auf Siliciumnitrid basierenden Materials beträgt.

2. Verfahren zum Einsetzen eines metallischen Erzeugnisses zum Zwecke des Abdichtens von Glas, umfassend:

a) Ausbilden eines Befestigungsteiles zum Ergreifen des Gegenstandes, wobei das Befestigungsteil hergestellt ist aus einem auf Siliciumnitrid basierenden Material und eine Zusammensetzung aufweist, welche im wesentlichen besteht aus etwa 0,5 bis 4 Gew.-% Aluminiumoxid, etwa 4 bis 8 Gew.-% Yttriumoxid, Rest Siliciumnitrid und welches eine Dichte aufweist von etwa 85 bis 97 % der theoretischen Dichte des auf Siliciumnitrid basierenden Materials;

b) Kontaktieren des Gegenstandes mit dem Befestigungsteil, um den Gegenstand zuverlässig an dem Befestigungsteil zu befestigen,

c) induktives Erwärmen des Gegenstandes bei einer Temperatur, welche ausreicht, um das Einbetten des Gegenstandes in dem Glas zu ermöglichen;

d) Einbetten des Gegenstandes in das Glas und

e) Entfernen des Befestigungsteils von dem Gegenstand.

3. Verfahren nach Anspruch 2, bei welchem der Gegenstand in Glas eingebettet wird, dessen Temperatur oberhalb der Verformungstemperatur des Glases liegt.